(19) Europäisches Patentamt
European Patent Office
Office européen des brevets

(11) **EP 4 703 909 A1**

(12) **EUROPEAN PATENT APPLICATION**

(43) Date of publication:
**04.03.2026 Bulletin 2026/10**

(21) Application number: **25184549.1**

(22) Date of filing: **23.06.2025**

(51) International Patent Classification (IPC):
**G06F 16/40** (2019.01)    **G06F 16/9032** (2019.01)

(52) Cooperative Patent Classification (CPC):
**G06F 16/40; G06F 16/90332**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.08.2024 IN 202421065910**

(71) Applicant: **Tata Consultancy Services Limited
Mumbai, Maharashtra 400 021 (IN)**

(72) Inventors:
• **SRIVASTAVA, Vivek
110001 New Delhi, Delhi (IN)**

• **RANJAN, Ashutosh
411057 Pune, Maharashtra (IN)**
• **KHATRI, Jyotsana
411057 Pune, Maharashtra (IN)**
• **BHAT, Savita Suhas
411028 Pune, Maharashtra (IN)**
• **KARANDE, Shirish Subhash
411006 Pune, Maharashtra (IN)**

(74) Representative: **Goddar, Heinz J. et al
Boehmert & Boehmert
Anwaltspartnerschaft mbB
Pettenkoferstrasse 22
80336 München (DE)**

(54) **METHODS AND SYSTEMS FOR MEME GENERATION WITH MULTI-MODAL INPUT AND PLANNING**

(57) The disclosure relates generally to methods and systems for meme generation with multi-modal input and planning. Conventional AI-based techniques either rely on input text prompt or the user-provided image as an input to generate the meme. Such input specification styles result in restrictive for clearly specifying an intent with a single modality. The present disclosure explores a multi-modal input specification style where a user can provide the input through a text prompt along with a widely popular meme template image. According to the present disclosure, the meme generation task is defined as a combination of two sub-tasks. In the first sub-task, a meme image template is retrieved from a dataset of existing meme templates using a template planning strategy. In the second sub-task, the text caption is generated for the retrieved template conditioned on the multi-modal input provided by the user through the caption planning strategy.

FIG. 2

EP 4 703 909 A1

**Description**

CROSS-REFERENCE TO RELATED APPLICATIONS AND PRIORITY

The present application claims priority from Indian provisional application no. 202421065910, filed on August 31, 2024.

TECHNICAL FIELD

The disclosure herein generally relates to meme generation, and, more particularly, to methods and systems for meme generation with multi-modal input and planning.

BACKGROUND

Memes are a popular multi-modal artefact used across social media platforms to convey various emotions and ideas such as humor, distress, commentary, etc. Also, memes have become a ubiquitous part of online communication and cultural discourse with applications in various domains such as brand engagement and social media campaigns. Traditionally, memes are manually generated by either adapting an already known meme image template or by using a snapshot from the digital media such as movies, sports feed, etc.

With the advent of large foundational models, there is an interest to use generative artificial intelligence (AI) technologies to automatically generate memes or aid creators in the process of meme generation. However, most of the AI-based conventional techniques either rely on input text prompt or the user-provided image as an input to generate the meme. Such input specification styles are restrictive in clearly specifying an intent with a single modality and pose challenging experiences for meme generation.

SUMMARY

Embodiments of the present disclosure present technological improvements as solutions to one or more of the above-mentioned technical problems recognized by the inventors in conventional systems.

In an aspect, a processor-implemented method for meme generation with multi-modal input and planning is provided. The method including the steps of: receiving a multi-modal input for which a meme is to be generated, from a user, wherein the multi-modal input comprises an input template image and a textual input obtained through multi-modalities; generating a contextual template plan from the input template image of the multi-modal input using a large language model (LLM) and a vision language model (VLM), wherein the contextual template plan comprises a description context, an action context, and an emotion context; recontextualizing the contextual template plan and the textual input of the multi-modal input, using the LLM, to obtain a recontextualized template plan for the multi-modal input, wherein the recontextualized template plan comprises a recontextualized description, a recontextualized action, and a recontextualized emotion; retrieving a final meme template for the multi-modal input based on the recontextualized template plan, using a max marginal relevance (MMR) search technique; generating a caption text plan based on the multi-modal input and the final meme template retrieved for the multi-modal input, using the LLM, wherein the caption text plan comprises a content context and a style context; generating meme caption text for the multi-modal input, using the LLM, based on the caption text plan, the contextual template plan of the final meme template, and a reference caption repository, wherein the reference caption repository comprises a plurality of reference text captions; and generating the meme for the multi-modal input, using the final meme template and the meme caption text.

In another aspect, a system for meme generation with multi-modal input and planning is provided. The system includes: a memory storing instructions; one or more Input/Output (I/O) interfaces; and one or more hardware processors coupled to the memory via the one or more I/O interfaces, wherein the one or more hardware processors are configured by the instructions to: receive a multi-modal input for which a meme is to be generated, from a user, wherein the multi-modal input comprises an input template image and a textual input obtained through multi-modalities; generate a contextual template plan from the input template image of the multi-modal input using a large language model (LLM) and a vision language model (VLM), wherein the contextual template plan comprises a description context, an action context, and an emotion context; recontextualize the contextual template plan and the textual input of the multi-modal input, using the LLM, to obtain a recontextualized template plan for the multi-modal input, wherein the recontextualized template plan comprises a recontextualized description, a recontextualized action, and a recontextualized emotion; retrieve a final meme template for the multi-modal input based on the recontextualized template plan, using a max marginal relevance (MMR) search technique; generate a caption text plan based on the multi-modal input and the final meme template retrieved for the multi-modal input, using the LLM, wherein the caption text plan comprises a content context and a style context; generate meme caption text for the multi-modal input, using the LLM, based on the caption text plan, the contextual template plan of the final meme template, and a reference caption repository, wherein the reference caption repository comprises a plurality of reference text captions; and generate the meme for the multi-modal input, using the final meme template and the meme caption text.

In yet another aspect, there are provided one or more non-transitory machine-readable information storage mediums comprising one or more instructions which when executed by one or more hardware processors cause: receiving a multi-modal input for which a meme is to be generated, from a user, wherein the multi-modal input comprises an input template image and a textual input obtained through multi-modalities; generating a contextual template plan from the input template image of the multi-modal input using a large language model (LLM) and a vision language model (VLM), wherein the contextual template plan comprises a description context, an action context, and an emotion context; recontextualizing the contextual template plan and the textual input of the multi-modal input, using the LLM, to obtain a recontextualized template plan for the multi-modal input, wherein the recontextualized template plan comprises a recontextualized description, a recontextualized action, and a recontextualized emotion; retrieving a final meme template for the multi-modal input based on the recontextualized template plan, using a max marginal relevance (MMR) search technique; generating a caption text plan based on the multi-modal input and the final meme template retrieved for the multi-modal input, using the LLM, wherein the caption text plan comprises a content context and a style context; generating meme caption text for the multi-modal input, using the LLM, based on the caption text plan, the contextual template plan of the final meme template, and a reference caption repository, wherein the reference caption repository comprises a plurality of reference text captions; and generating the meme for the multi-modal input, using the final meme template and the meme caption text.

In an embodiment, the description context of the contextual template plan is generated from the input template image of the multi-modal input using the LLM, by: obtaining a template metadata of the input template image, from a template metadata repository; generating a plurality of tags depicting circumstances under which the input template image is relevant, from the template metadata, using the LLM; and contextually combining the plurality of tags, using the LLM, to generate the description context of the contextual template plan.

In an embodiment, the action context of the contextual template plan is generated from the input template image of the multi-modal input using the VLM, by: passing the input template image of the multi-modal input to a vision encoder of the VLM, to obtain one or more vision embeddings; passing a text instruction of an action associated with the input template image, to a text encoder of the VLM, to obtain one or more action textual embeddings; and generating the action context of the contextual template plan from a text decoder of the VLM, by conditioning the one or more vision embeddings and the one or more action textual embeddings.

In an embodiment, the emotion context of the contextual template plan is generated from the input template image of the multi-modal input using the VLM, by: passing the input template image of the multi-modal input to a vision encoder of the VLM, to obtain one or more vision embeddings; passing a text instruction of an emotion associated with the input template image, to a text encoder of the VLM, to obtain one or more emotion textual embeddings; and generating the emotion context of the contextual template plan from a text decoder of the VLM, by conditioning the one or more vision embeddings and the one or more emotional textual embeddings.

In an embodiment, retrieving the final meme template for the multi-modal input based on the recontextualized template plan, using the MMR technique, comprises: retrieving (i) an initial description template based on the recontextualized description present in the recontextualized template plan, (ii) an initial action template based on the recontextualized action present in the recontextualized template plan, and (iii) an initial emotion template based on the recontextualized emotion present in the recontextualized template plan, from a meme template repository, using the MMR search technique; and choosing the final meme template out of the initial description template, the initial action template and the initial emotion template that best matches the recontextualized template plan, using the MMR search technique.

In an embodiment, generating the caption text plan based on the multi-modal input and the final meme template retrieved for the multi-modal input, using the LLM, comprises: deriving a plurality of key phrases from the textual input of the multi-modal input, using the LLM; contextually combining the plurality of key phrases, using the LLM, to generate the content context; retrieving a plurality of style specific attributes from the multi-modal input, using the LLM based on the contextual template plan of the final meme template; contextually combining the plurality of style specific attributes, using the LLM, to generate the style context; and generating the caption text plan using the content context and the style context.

In an embodiment, generating the meme caption text for the multi-modal input, using the LLM, based on the caption text plan, the contextual template plan of the final meme template, and the reference caption repository, comprises: extracting one or more reference captions out of the plurality of reference captions present in the reference caption repository, based on the contextual template plan of the final meme template; and passing the one or more reference captions, the caption text plan, and the contextual template plan of the final meme template, to the LLM, to generate the meme caption text for the multi-modal input.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for meme generation with multi-modal input and planning, in accordance with some embodiments of the present disclosure.

FIG. 2 is an exemplary block diagram illustrating a plurality of modules of the system of FIG. 1, for meme generation with multi-modal input and planning, in accordance with some embodiments of the present disclosure.

FIGS. 3A-3B illustrate exemplary flow diagrams of a processor-implemented method for meme generation with multi-modal input and planning, using the system of FIG. 1, in accordance with some embodiments of the present disclosure.

FIG. 4 is a flow diagram showing steps for generating a description context of the contextual template plan from the input template image of the multi-modal input using a large language model (LLM), in accordance with some embodiments of the present disclosure.

FIG. 5 shows an exemplary input template image along with the template metadata available in a known memes template (KMT) dataset, in accordance with some embodiments of the present disclosure.

FIG. 6 is a flow diagram showing steps for generating an action context of the contextual template plan from the input template image of the multi-modal input using a vision language model (VLM), in accordance with some embodiments of the present disclosure.

FIG. 7 is a flow diagram showing steps for generating an emotion context of the contextual template plan from the input template image of the multi-modal input using the VLM, in accordance with some embodiments of the present disclosure.

FIG. 8 is a flow diagram showing steps for retrieving a final meme template for the multi-modal input based on the recontextualized template plan, using a max marginal relevance search (MMR) technique, in accordance with some embodiments of the present disclosure.

FIG. 9 is a flow diagram showing steps for generating a caption text plan based on the multi-modal input and the final meme template retrieved for the multi-modal input, using the LLM, in accordance with some embodiments of the present disclosure.

FIG. 10 is a flow diagram showing steps for generating the meme caption text for the multi-modal input, using the LLM, based on the caption text plan, the contextual template plan of the final meme template, and the reference caption repository, in accordance with some embodiments of the present disclosure.

FIG. 11 is a flowchart showing the recontextualized template plan and the final meme template obtained for an exemplary multi-modal input provided by the user, in accordance with some embodiments of the present disclosure.

FIG. 12 is a flowchart showing the caption text plan and the meme caption text generated for an exemplary multi-modal input of FIG. 11, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The term "meme" was coined by Richard Dawkins in 1976 as a cultural parallel to genes to discuss the evolutionary principles in explaining the spread of ideas and cultural phenomena through copying and imitation. Internet memes have been a recent phenomenon where ideas, emotions, and experiences are communicated through a multi-modal artifact which is usually an image (meme image template) paired with text (meme text caption). Over the years, several terminologies, definitions, and grammar relating to meme have evolved. Some key terms include template, caption, macro, spread, tags, origin, background, and feedback. *Macro* depicts the name of the template whereas *tags* show the broad set of key terms depicting the meme. *Origin* highlights the first usage of the meme and *spread* shows the adaptation of the meme across contexts. *Feedback* shows the engagement such as like and comment with the meme. Through collective creation of individuals, a few meme templates gain widespread popularity across cultural groups and communities. Understanding memes remains a challenge for the audience unaware of the cultural context and the meme grammar.

Thus, memes are a powerful medium of communication in the digital age to convey ideas, humor, targeted messages, etc. With the advent of generative artificial intelligence (AI) technologies such as Large Language Models (LLMs), there is an uptick in the interest in synthesizing memes from user provided inputs. Conventional generative AI technologies have focused on generating the memes through either text prompt or template images as a query. Such input formats are extremely restrictive in clearly specifying the intent with a single modality.

The present disclosure solves the technical problems in the art with methods and systems. The present disclosure explores a multi-modal input specification style where a user can provide the input through a text prompt along with a widely popular meme template image. According to the present disclosure, the meme generation task is defined as a combination of two sub-tasks: (i) meme image template retrieval, and (ii) meme text caption generation. In the first sub-task, a meme image template is retrieved from a dataset of existing meme templates. Whereas, in the second sub-task, the text caption is generated for the retrieved template conditioned on the multi-modal input provided by the user. Further, the present disclosure provides a template planning strategy and caption planning strategy to effectively represent the multi-modal user input for both the sub-tasks.

Thus, the present disclosure provides a multi-modal user input specification style comprising both the template image and the text prompt to generate memes at ease. The disclosed template and caption planning strategy is employed to effectively represent the multi-modal input required for the meme generation by leveraging large foundational models.

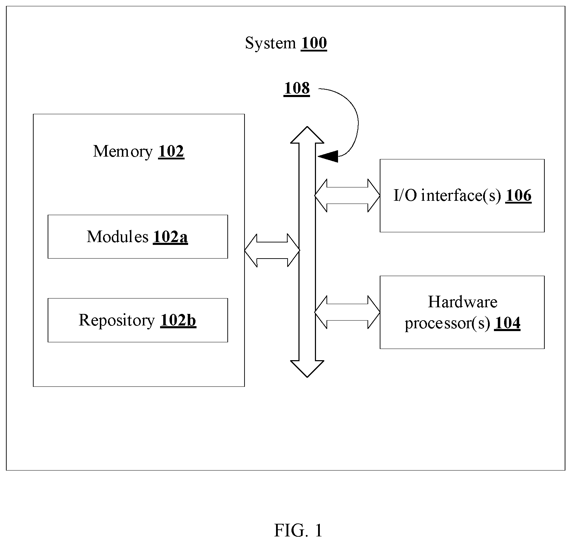

Referring now to the drawings, and more particularly to FIG. 1 through FIG. 12, where similar reference characters denote corresponding features consistently throughout the figures, there are shown preferred embodiments, and these embodiments are described in the context of the following exemplary system and/or method.

FIG. 1 is an exemplary block diagram of a system 100 for meme generation with multi-modal input and planning, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

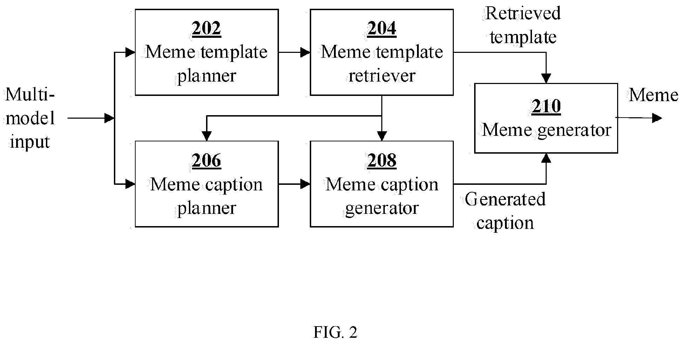

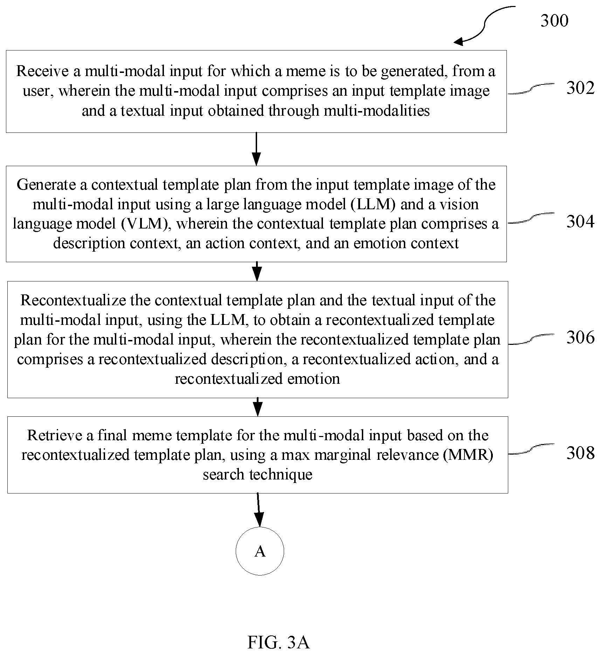

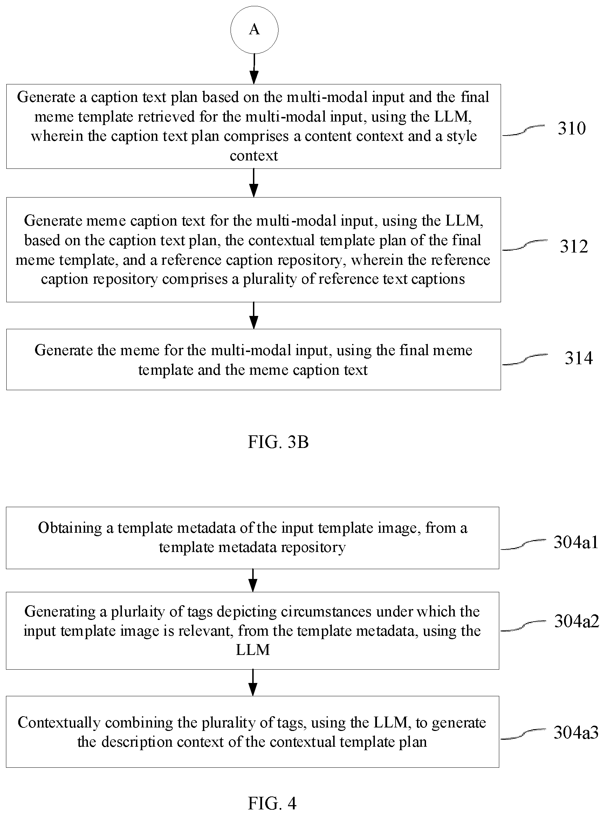

Referring collectively to FIG. 2 and FIGS. 3A-3B, components and functionalities of the system 100 are described in accordance with an example embodiment of the present disclosure. For example, FIG. 2 is an exemplary block diagram illustrating the plurality of modules 102a of the system 100 of FIG. 1, for meme generation with multi-modal input and planning, in accordance with some embodiments of the present disclosure. In an embodiment, the plurality of modules 102a include a meme template planner 202, a meme template retriever 204, a meme caption planner 206, a meme caption generator 208, and a meme generator 210.

In an embodiment, the meme template planner 202 is configured to receive the multi-model input and generate a contextual template plan. In an embodiment, the meme template retriever 204 is configured to retrieve a meme template most matched for the given multi-model input based on the contextual template plan generated by the meme template planner 202.

In an embodiment, the meme caption planner 206 is configured to generate the caption text plan from the given multi-model input based on the meme template retrieved by the meme template retriever 204. In an embodiment, the meme caption generator 208 is configured to generate the meme caption text for the multi-model input based on the caption text plan generated by the meme caption planner 206 based on the meme template retrieved by the meme template retriever 204. In an embodiment, the meme generator 210 is configured to generate the meme for the multi-model input, using the meme template retrieved by the meme template retriever 204 and the meme caption text generated by the meme caption generator 208.

For example, FIGS. 3A-3B illustrate exemplary flow diagrams of a processor-implemented method 300 for meme generation with multi-modal input and planning, using the system 100 of FIG. 1, in accordance with some embodiments of the present disclosure. Although steps of the method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more hardware processors 104 of the system 100 are configured to receive a multi-modal input for which a meme is to be generated. The system 100 is configured to receive the multi-modal input from a user for whom the meme is to be generated. In an embodiment, the multi-modal input includes an input template image and a textual input. The multi-modal input obtained through multi-modalities wherein one modality is an image type such as the input template image and the other modality is a text type such as the textual input. The objective of the present disclosure is to generate the meme based on both the input template image and the textual input present in the multi-modal input.

At step 304 of the method 300, the one or more hardware processors 104 of the system 100 are configured to generate a contextual template plan from the input template image of the multi-modal input using a large language model (LLM) and a vision language model (VLM), through the meme template planner 202. The contextual template plan refers to the contextual planning of a template that suits the given multi-modal input at step 302 of the method 300, for generating the meme.

In an embodiment, the contextual template plan includes a description context, an action context, and an emotion context. In an embodiment, the description context refers to the context of the content (description) that is associated with the multi-modal input. According to the present disclosure, the description context of the contextual template plan is generated from the input template image of the multi-modal input. The LLM either finetuned or configured, is used to generate the description context of the contextual template plan.

FIG. 4 is a flow diagram showing steps for generating the description context of the contextual template plan from the input template image of the multi-modal input using the LLM, in accordance with some embodiments of the present disclosure. As shown in FIG. 4, generating the description context of the contextual template plan from the input template image of the multi-modal input using the LLM is explained through steps 304a1 to 304a3.

At step 304a1, a template metadata of the input template image is obtained from a template metadata repository. The template metadata repository maintains the template metadata of plurality of template images. The template metadata contains details of the input template image such as the template name, an origin, about the template image, a plurality of related tags, example captions (also referred as reference captions and interchangeably used herein) associated with the input template image and so on.

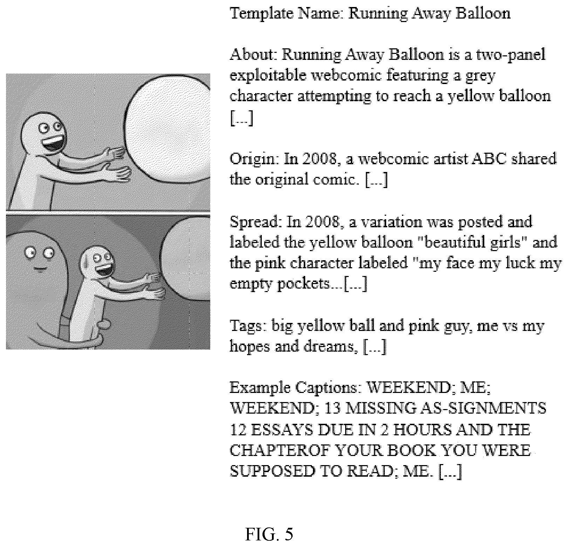

FIG. 5 shows an exemplary input template image along with the template metadata available in the KMT dataset, in accordance with some embodiments of the present disclosure. As shown in FIG. 5, the template metadata of the exemplary input template image shows the template name, about the input template image, origin, spread, tags, and example captions.

At step 304a2, a plurality of tags are generated from the template metadata obtained at step 304a1, using the LLM. The plurality of tags depicts the circumstances under which the input template image is relevant. At step 304a3, the plurality of tags that are generated at step 304a2 are contextually combined, using the LLM, to generate the description context of the contextual template plan.

Similarly, the action context refers to the context of the action associated with any subject or object present in the input template image. According to the present disclosure, the action context of the contextual template plan is generated from the input template image of the multi-modal input. The VLM, either pre-trained, finetuned, or configured, is used to generate the action context of the contextual template plan. According to the present disclosure the VLM contains a vision encoder, a text encoder, and a text decoder.

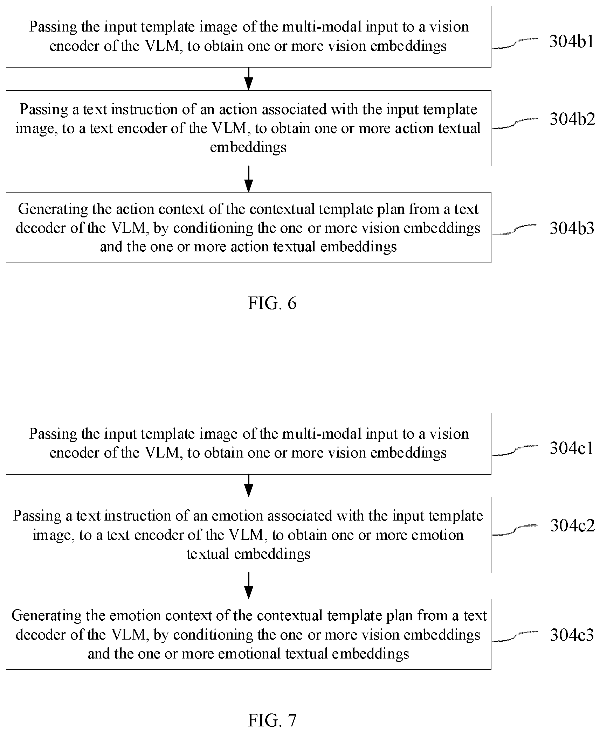

FIG. 6 is a flow diagram showing steps for generating the action context of the contextual template plan from the input template image of the multi-modal input using the VLM, in accordance with some embodiments of the present disclosure. As shown in FIG. 6, generating the action context of the contextual template plan from the input template image of the multi-modal input using the VLM is explained through steps 304b1 to 304b3.

At step 304b1, the input template image of the multi-modal input is passed to a vision encoder of the VLM, to obtain one or more vision embeddings. The one or more vision embeddings are associated with the subject (s) and/or object (s) that are visualized in the input template image. At step 304b2, a text instruction of an action associated with the input template image, is passed to a text encoder of the VLM, to obtain one or more action textual embeddings. The one or more action textual embeddings are associated with the information about the action that is being performed by the subject (s) and/or object (s) visualized in the input template image.

Finally, at step 304b3, the action context of the contextual template plan is generated from a text decoder of the VLM. The text decoder generates the action context of the contextual template plan by conditioning the one or more vision embeddings obtained at step 304b1 and the one or more action textual embeddings obtained at step 304b2.

Similarly, the emotion context refers to the context of the emotion associated with any subject or object present in the input template image. According to the present disclosure, the emotion context of the contextual template plan is generated from the input template image of the multi-modal input. The VLM, either pre-trained, finetuned, or configured, is used to generate the emotion context of the contextual template plan.

FIG. 7 is a flow diagram showing steps for generating the emotion context of the contextual template plan from the input template image of the multi-modal input using the VLM, in accordance with some embodiments of the present disclosure. As shown in FIG. 7, generating the emotion context of the contextual template plan from the input template image of the multi-modal input using the VLM is explained through steps 304c1 to 304c3.

At step 304c1, the input template image of the multi-modal input is passed to the vision encoder of the VLM, to obtain one or more vision embeddings. The one or more vision embeddings are associated with the subject (s) and/or object (s) that are visualized in the input template image. At step 304c2, a text instruction of an emotion associated with the input template image, is passed to the text encoder of the VLM, to obtain one or more emotion textual embeddings. The one or more emotion textual embeddings are associated with the information about the emotion of the subject (s) and/or object (s) visualized in the input template image.

Finally, at step 304c3, the emotion context of the contextual template plan is generated from the text decoder of the VLM. The text decoder generates the emotion context of the contextual template plan by conditioning the one or more vision embeddings obtained at step 304c1 and the one or more emotion textual embeddings obtained at step 304c2.

At step 306 of the method 300, the one or more hardware processors 104 of the system 100 are configured to recontextualize the contextual template plan and the textual input of the multi-modal input, using the LLM, to obtain a recontextualized template plan for the multi-modal input. The description context, the action context, and the emotion context of the contextual template plan is recontextualized by adding the textual input to each context (the description context, the action context, and the emotion context). Thus, the recontextualized template plan comprises a recontextualized description, a recontextualized action, and a recontextualized emotion.

At step 308 of the method 300, the one or more hardware processors 104 of the system 100 are configured to retrieve a final meme template for the multi-modal input based on the recontextualized template plan obtained at step 306 of the method 300, through the meme template retriever 204. A max marginal relevance (MMR) search technique is employed over a meme template repository to retrieve the final meme template for the multi-modal input based on the recontextualized template plan.

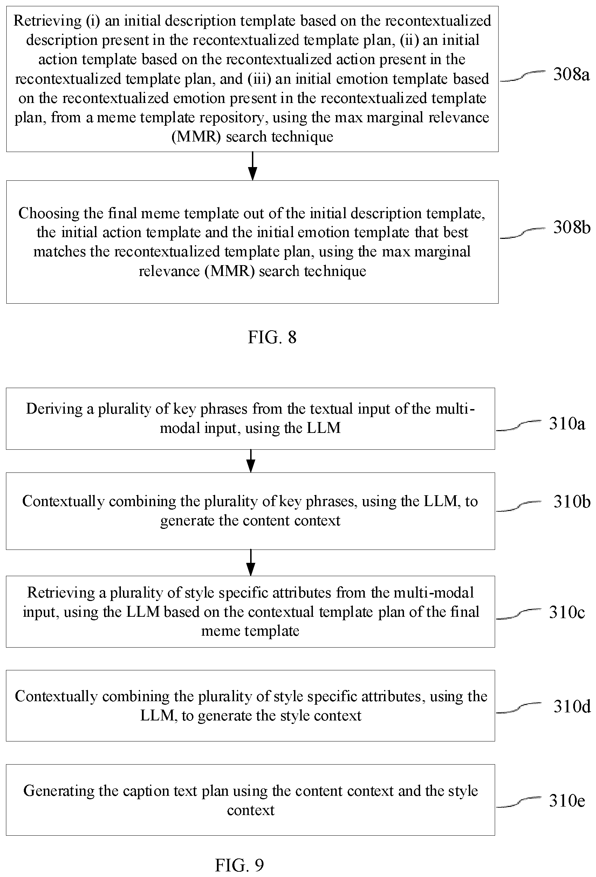

FIG. 8 is a flow diagram showing steps for retrieving the final meme template for the multi-modal input based on the recontextualized template plan, using the MMR search technique, in accordance with some embodiments of the present disclosure. As shown in FIG. 8, retrieving the final meme template for the multi-modal input based on the recontextualized template plan, using the MMR search technique is explained through steps 308a to 308b.

At step 308a, an initial template is retrieved for each of the recontextualized description, the recontextualized action, and the recontextualized emotion present in the recontextualized template plan, at first stage retrieval, from a meme template repository, using the MMR search technique. More specifically an initial description template is retrieved that is best matched to the recontextualized description present in the recontextualized template plan. An initial action template is retrieved that is best matched the recontextualized action present in the recontextualized template plan. Similarly, an initial emotion template is retrieved that is best matched to on the recontextualized emotion present in the recontextualized template plan.

The meme template repository contains a plurality of templates indicating various aspects, context, emotions, and so on. For example, the meme template repository containing a dataset of known meme templates is curated from related metadata such as ImgFlip and known meme repository such as KnowYourMeme. The ImgFlip houses all though the plethora of image macros and the corresponding memes, it lacks the metadata information related to those macros. On the other hand, the KnowYourMeme being an encyclopedia for memes, has the relevant background information regarding the macros but lacks variety in memes. Hence, a holistic database of memes using both the sources is curated.

Firstly, the meme templates available in the popular memes section of ImgFlip are collected. Along with the template name, the meme template, tags, and alternate names are curated. Then a template name is used to retrieve at most four meme templates from KnowYourMeme along with the available metadata (e.g., about, origin, spread, etc.). Given the diversity in the template name and the image on both platforms, an external mechanism is employed to tie the data collected from both the platforms and then the template is matched based on the template names. Further a Scale Invariant Feature Transform (SIFT) algorithm is employed to match the images for similarity. After the curation process, about 764 high-quality meme templates were collected along with relevant background information in the meme template repository.

The MMR search technique is employed to retrieve the template among the plurality of templates present in the meme template repository, where the retrieved template is the best match for the given context attribute such as the recontextualized description, the recontextualized action, and the recontextualized emotion. The MMR search technique reduces the redundancies among the results of the plurality of templates and uses the similarity technique for the best match of the resulted templates for the given context attribute.

At step 308b, the final meme template is retrieved, at second stage retrieval, out of the initial description template, the initial action template and the initial emotion template obtained at step 308a, using the MMR search technique. The final meme template is again the best match meme template for all the recontextualized description, the recontextualized action, and the recontextualized emotion present in the recontextualized template plan.

At step 310 of the method 300, the one or more hardware processors 104 of the system 100 are configured to generate a caption text plan, through the meme caption planner 206, based on the multi-modal input received at step 302 of the method 300 and the final meme template retrieved for the multi-modal input at step 308 of the method 300. Again, the LLM either finetuned or configured, is used to generate the caption text plan.

The caption text plan includes a content context and a style context. In an embodiment, the content context is the context of the content that is most relevant to the multi-modal input and the final meme template. In an embodiment, the style content is the context of the style that is most suitable for the multi-modal input and the final meme template.

FIG. 9 is a flow diagram showing steps for generating the caption text plan based on the multi-modal input and the final meme template retrieved for the multi-modal input, using the LLM, in accordance with some embodiments of the present disclosure. As shown in FIG. 9, generating the caption text plan based on the multi-modal input and the final meme template retrieved for the multi-modal input using the LLM is explained through steps 310a to 310e.

At step 310a, a plurality of key phrases is derived from the textual input of the multi-modal input, using the LLM. At step 310b, the plurality of key phrases derived at step 310a are contextually combined using the LLM, to generate the content context. Further, at step 310c, a plurality of style specific attributes is retrieved from the multi-modal input, using the LLM based on the contextual template plan of the final meme template. In an embodiment, the contextual template plan of the final meme template is generated as explained at step 304 of the method 300. In an embodiment, the plurality of style specific attributes are tone, language, formatting, and overall aesthetics.

At step 310d, the plurality of style specific attributes retrieved at step 310c are contextually combined using the LLM to generate the style context. Finally at step 310e, the content context obtained at step 310b, and the style context obtained at step 310d are combined to generate the caption text plan.

At step 312 of the method 300, the one or more hardware processors 104 of the system 100 are configured to generate meme caption text for the multi-modal input, using the LLM, through the meme caption generator 208. The meme caption text for the multi-modal input is generated based on the caption text plan generated at step 310 of the method 300, the contextual template plan of the final meme template obtained at step 310c, and a reference caption repository (also referred to as an exemplary captioned repository and may be interchangeably used herein). The reference caption repository comprises a plurality of reference text captions.

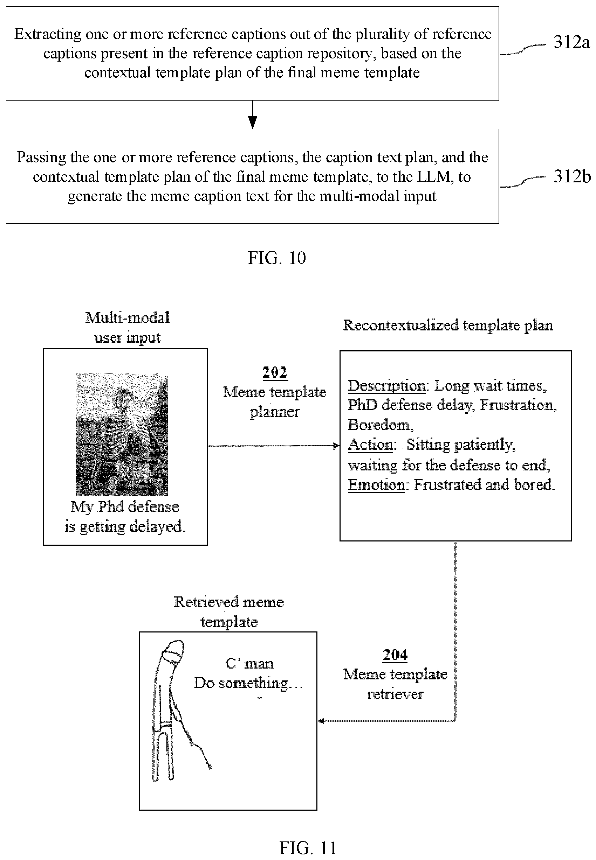

FIG. 10 is a flow diagram showing steps for generating the meme caption text for the multi-modal input, using the LLM, based on the caption text plan, the contextual template plan of the final meme template, and the reference caption repository, in accordance with some embodiments of the present disclosure. As shown in FIG. 10, generating the meme caption text for the multi-modal input is explained through steps 312a to 312b.

At step 312a, one or more reference captions out of the plurality of reference captions present in the reference caption repository, are extracted based on the contextual template plan of the final meme template. The one or more reference captions are the most suitable captions for the contextual template plan of the final meme template.

At step 312b, the one or more reference captions extracted at step 312a, the caption text plan obtained at step 310 of the method 300, and the contextual template plan of the final meme template are passed to the LLM, to generate the meme caption text for the multi-modal input. Further, the meme caption text may be regenerated based on a feedback from the user and the regenerated meme caption text may be considered while the meme generation for the multi-modal input.

At step 314 of the method 300, the one or more hardware processors 104 of the system 100 are configured to generate the meme for the multi-modal input, using the final meme template and the meme caption text, through the meme generator 210. More specifically, the final meme template retrieved at step 308 of the method 300 and the meme caption text (or the refined meme caption text) generated at step 312 of the method 300 are combined to generate the meme for the multi-modal input.

FIG. 11 is a flowchart showing the recontextualized template plan and the final meme template obtained for an exemplary multi-modal input provided by the user, in accordance with some embodiments of the present disclosure. As shown in FIG. 11, the exemplary multi-modal input includes a skeleton human image standing on a table as the input template image and 'My Phd defense is getting delayed' as the textual input. The recontextualized template plan generated for the exemplary multi-modal input includes Recontextualized Description: Long wait times, PhD defense delay, Frustration, Boredom; Recontextualized Action: Sitting patiently, waiting for the defense to end; and Recontextualized Emotion: Frustrated and bored. The retrieved final meme template contains a meme image resembling the skeleton human sketch with the text 'C' man Do something....

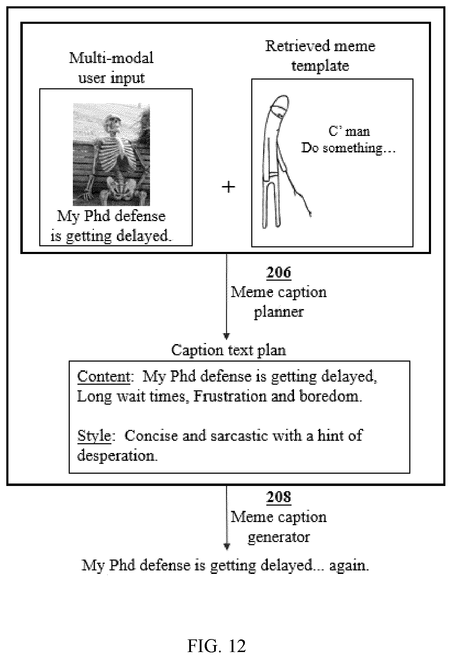

FIG. 12 is a flowchart showing the caption text plan and the meme caption text generated for an exemplary multi-modal input of FIG. 11, in accordance with some embodiments of the present disclosure. As shown in FIG. 12, the generated caption text plan includes Content: My Phd defense is getting delayed, Long wait times, Frustration and boredom; and Style: Concise and sarcastic with a hint of desperation. Further the generated meme caption text for the exemplary multi-modal input is 'My Phd defense is getting delayed... again'.

The methods and systems of the present disclosure utilize the multi-modal user input specification style where the user can provide the input through the text prompt along with the widely popular meme template image to generate memes at ease. The disclosed contextual template plan and caption text plan (planning strategy) of the present disclosure effectively represent the multi-modal input required for the meme generation by leveraging the large foundational models.

In contrast to conventional techniques of generating the memes, the methods and systems of the present disclosure allow the user to clearly specify their intent through the multi-modal input. Further, the methods and systems of the present disclosure help to efficiently identify new and relevant templates from diverse media sources and contextualize the placement of the generated caption on the template as it plays a big role in bringing out the message clearly.

Example Scenario:

The methods and systems of the present disclosure are qualitatively analyzed by generating example memes. Along with the textual query input (textual input), the user selected one popular meme template (input template image) out of 20 seed meme templates depicting a diverse set of actions and emotions. Consider, the textual user query as $q$ and the seed meme template as $t_{seed}$. Leveraging this multi-modal user input, the final meme template was retrieved from the KMT dataset and then the caption text was generated for the retrieved meme template. Consider denoting the retrieved meme template as $t_{ret}$ and the corresponding generated caption as $c_{ret}$, then the meme generation task $M$ with multi-modal input $t_{seed}$ and $q$ can be formally written as:

$$M(t_{seed}, q) = F_{ret}(t_{seed}, q) \cup F_{gen}\big(t_{seed}, q, F_{ret}(.)\big) \qquad (1)$$

where, $F_{ret}(.)$ and $F_{gen}(.)$ denotes the meme template retriever 204 and meme caption generator 208 respectively.

Given the multi-modal user input ($t_{seed}$, $q$), the final meme template $t_{ret}$ was retrieved from the KMT dataset. To this extent, first the contextual template plan (also referred as the template plan and can be interchangeably used herein) for the seed templates and the templates in the KMT dataset were generated. The selected seed template was denoted as $t_{seed}^{plan}$ and the templates in the KMT dataset as $t_{KMT}^{plan}$. The template plan is a verbal description of the template across three attributes: description ($D$), action ($A$), and emotion ($E$). To identify the action and the emotion from the meme template image, the vision language model (VLM) supporting visual question-answering (such as mPLUG-Owl - Modularization Empowers Large Language Models with Multimodality as known in the art) was employed. For the given template, the description context was identified by prompting a large language model (Llama-2) with the metadata information for that template. Further, the pre-computed seed template plan $t_{seed}^{plan}$ was recontextualized for the user query $q$ using an LLM agent $L(.)$. The re-contextualized template plan $t_{query}^{plan}$ can be mathematically expressed as:

$$t_{query}^{plan} = L(t_{seed}^{plan}, q) \qquad (2)$$

The final meme template was retrieved from the KMT using the two-stage approach based on the MMR search technique. In the first stage, the templates were retrieved from the KMT dataset by matching based on the description, action, and emotion individually in the template plan (equation (3)). Retrieval based on matching individual attributes helps maintain the diversity in the retrieved templates.

$$t_{ret}(k) = MMR\left(t_{query}^{plan}(k), t_{KMT}^{plan}(k)\right); k \in \{D, A, E\} \qquad (3)$$

Where, $t_{ret}(k)$ denotes the meme template retrieved based on individual attribute $k \in \{D, A, E\}$. In the second stage, the contextual template plan was considered with all the three attributes for the retrieved templates in the previous stage (equation (4) and equation (5)) and matched against the template plan for the user input.

$$T_{ret} = \{t_{ret}(D), t_{ret}(A), t_{ret}(E)\} \qquad (4)$$

$$T_{ret}^{plan} = \{t_{ret}^{plan}(D), t_{ret}^{plan}(A), t_{ret}^{plan}(E)\} \qquad (5)$$

Where, $t_{ret}^{plan}(.)$ denotes the template plan with all the three attributes for the retrieved template. Then, the best meme template (the final meme template) was selected among them by considering the MMR search technique with the template plan for the user input, which can be expressed as equation (6):

$$F_{ret}(t_{seed}, q) = MMR(t_{query}^{plan}, T_{ret}^{plan}) \qquad (6)$$

The MMR search technique -based retrieval promotes diversity and relevance to the query which is an important aspect for template retrieval and meme generation. Further, given the multi-modal user input ($t_{seed}$, $q$) and the retrieved meme template $t_{ret}$ from the KMT dataset, the meme caption $c_{ret}$ was generated to create the meme by placing $t_{ret}$ and $c_{ret}$ together. To this extent, the caption text plan $c_{query}^{plan}$ was obtained first for the user query and the retrieved template. The caption text plan consists of two attributes: *content* and *style*. The caption text plan helps the meme caption generator to tune its response by providing a comprehensive overview of the user's requirements along with gauging the compatibility with the retrieved meme template. Further, the meme caption generator was grounded to the three popular captions ($c_{exp}$) for the retrieved meme template. The in-context learning (ICL) helped the meme caption generator stylize its response based on the reference captions. Formally it can be expressed as:

$$c_{query}^{plan} = L(t_{query}^{plan}, t_{ret}^{plan}) \qquad (7)$$

$$F_{gen}(t_{seed}, q, F_{ret}(.)) = L(t_{query}^{plan}, t_{ret}^{plan}, c_{query}^{plan}, c_{exp}) \qquad (8)$$

Where, $L(.)$ is an LLM agent accepting the instruction as the text prompt and return the response basis their world knowledge, training methodology, and user instruction. Furthermore, the generated caption was optimized based on the feedback received from an LLM agent. The LLM agent was prompted to provide targeted feedback on the generated caption for the user segment based on their demography (age range, occupation, geography, and languages). The meme caption can be regenerated by leveraging this targeted feedback as an additional grounding criterion. Thus, the targeted feedback was considered as an optional component depending on the availability of the user's demographic information.

Further, a user survey was conducted to get feedback about the quality of the generated memes by the present disclosure where the users were asked to provide the requirements to generate 4 memes, three based on given themes and one openended. The three themes considered are: (1) Work environment, (2) Online shopping, and (3) Food habits and exercise. The user requirement was considered as a combination of the textual query and the seed meme template. Overall, 16 users responded to the survey. Based on the user input, the meme template was retrieved, and three caption variants were generated with: (1) caption with no in-context learning (ICL) and no targeted feedback, (2) caption with ICL and no targeted feedback, and (3) caption with ICL and targeted feedback.

Further, the demography of the users was also recorded to understand the impact of targeted feedback on the caption generation. A group of four evaluators (E1, E2, E3, and E4) evaluate the quality of each meme generated by the present disclosure based on the requirements given by the users. Each evaluator is shown with the user input and the generated meme followed by an exemplary set having seven questions. Table 1 shows the exemplary set having seven questions and Table 2 shows the evaluation results from the four evaluators.

Table 1

| Sl.No. | Question |
|---|---|
| Q1 | Select the best caption. If the best caption appears more than once, select all the occurrences of the best caption. In further questions, consider this caption as the final generated caption for the meme. |
| Q2 | Is the meme easy to understand? |
| Q3 | On a scale of 1-5 (5 is high and 1 is low), how relevant the meme is to the user requirement? |
| Q4 | On a scale of 1-5 (5 is high and 1 is low), how satisfied you are with the meme generated? |
| Q5 | Given a chance, what will you change: image or text? |
| Q6 | Is the meme funny/humorous? |
| Q7 | Is the meme offensive, targeted or hateful? |

Table 2

| Question | | E1 | E2 | E3 | E4 | Overall |
|---|---|---|---|---|---|---|
| Q1 (%) | $c_{ret}^1$ | 31.25 | 53.13 | 34.38 | 40.63 | 39.84 |
| | $c_{ret}^2$ | 50 | 48.44 | 48.44 | 45.31 | 48.05 |
| | $c_{ret}^3$ | 34.38 | 37.5 | 46.88 | 53.13 | 42.97 |
| | $c_{ret}^4$ | 29.69 | 12.5 | 18.75 | 12.5 | 18.36 |
| Q2*(%) | | 64.06 | 92.19 | 73.44 | 78.13 | 76.95 |
| Q3** | | 2.77 | 3.45 | 3.8 | 3.5 | 3.38 |
| Q4** | | 2.38 | 3.37 | 3.5 | 3.28 | 3.13 |
| Q5 (%) | Image only | 12.5 | 1.56 | 3.13 | 54.69 | 17.97 |
| | Text only | 42.19 | 42.19 | 21.88 | 3.13 | 27.34 |
| | Both image and text | 25 | 43.75 | 26.56 | 12.5 | 26.95 |
| | None | 14.06 | 6.25 | 42.19 | 23.44 | 21.48 |
| Q6*(%) | | 50 | 90.63 | 70.31 | 68.75 | 69.92 |
| Q7*(%) | | 3.13 | 1.56 | 0 | 0 | 1.17 |

In Table 2, the questions marked with * were reported with a percentage of 'yes' response. The questions marked with ** were reported with an average score. Here, $c_{ret}^1$ refers to the caption with no ICL and no feedback, $c_{ret}^2$ refers to the caption with ICL and no feedback, $c_{ret}^{3}$ refers to the caption with ICL and no feedback, and $c_{ret}^{4}$ refers none.

It was observed that the captions generated with ICL, and no targeted feedback are the most preferred followed closely by the captions generated with ICL and targeted feedback. It highlights the importance of ICL and targeted feedback to contextualize the caption for the retrieved template. It was also observed that a small proportion of the generated memes where none of the generated captions are preferred by the evaluators suggesting the scope to enhance the system's capability to align with the user's requirements. Furthermore, the evaluators found a significant proportion of the memes easy to understand ($\approx$ 77%) and relevant to the user requirement. The overall user satisfaction for the generated memes was above average (>3) and the evaluators found most of the memes as funny/humorous ($\approx$ 70%) and non-offensive ($\approx$ 99%). Further, the users wanted to update only the retrieved images for 18% memes, which shows the efficacy of the template retrieval system even with a relatively small dataset of known memes templates. Owing to the positive feedback from the user study, the present disclosure helps both the expert and novice meme creators to be more expressive about their ideas and emotions presented effectively though memes. The present disclosure can also be used as an ideation tool to assist the user in creating novel memes and adapting existing meme templates in unseen contexts.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of meme generation from the multi-modal input specification style where the user can provide the input through the text prompt along with the widely popular meme template image. The meme generation task of the present disclosure is defined as a combination of two sub-tasks: (i) meme image template retrieval and (ii) meme text caption generation. In the first sub-task, a meme image template is retrieved from a dataset of existing meme templates. Whereas, in the second sub-task, the text caption is generated for the retrieved template conditioned on the multi-modal input provided by the user. Further, the present disclosure provides a template planning strategy and caption planning strategy to effectively represent the multi-modal user input for both the sub-tasks.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (300), comprising:

   receiving, via one or more input/output (I/O) interfaces, a multi-modal input for which a meme is to be generated, from a user, wherein the multi-modal input comprises an input template image and a textual input obtained through multi-modalities (302);
   generating, via one or more hardware processors, a contextual template plan from the input template image of the multi-modal input using a large language model (LLM) and a vision language model (VLM), wherein the contextual template plan comprises a description context, an action context, and an emotion context (304);
   recontextualizing, via the one or more hardware processors, the contextual template plan and the textual input of the multi-modal input, using the LLM, to obtain a recontextualized template plan for the multi-modal input, wherein the recontextualized template plan comprises a recontextualized description, a recontextualized action, and a recontextualized emotion (306);
   retrieving, via the one or more hardware processors, a final meme template for the multi-modal input based on the recontextualized template plan, using a max marginal relevance (MMR) search technique (308);
   generating, via the one or more hardware processors, a caption text plan based on the multi-modal input and the final meme template retrieved for the multi-modal input, using the LLM, wherein the caption text plan comprises a content context and a style context (310);
   generating, via the one or more hardware processors, a meme caption text for the multi-modal input, using the LLM, based on the caption text plan, the contextual template plan of the final meme template, and a reference caption repository, wherein the reference caption repository comprises a plurality of reference text captions (312); and
   generating, via the one or more hardware processors, the meme for the multi-modal input, using the final meme template and the meme caption text (314).

2. The processor-implemented method (300) as claimed in claim 1, wherein the description context of the contextual template plan is generated from the input template image of the multi-modal input using the LLM, by:

   obtaining a template metadata of the input template image, from a template metadata repository (304a1);
   generating a plurality of tags depicting circumstances under which the input template image is relevant, from the template metadata, using the LLM (304a2); and
   contextually combining the plurality of tags, using the LLM, to generate the description context of the contextual template plan (304a3).

3. The processor-implemented method (300) as claimed in claim 1, wherein the action context of the contextual template plan is generated from the input template image of the multi-modal input using the VLM, by:

   passing the input template image of the multi-modal input to a vision encoder of the VLM, to obtain one or more vision embeddings (304b1);
   passing a text instruction of an action associated with the input template image, to a text encoder of the VLM, to obtain one or more action textual embeddings (304b2); and
   generating the action context of the contextual template plan from a text decoder of the VLM, by conditioning the one or more vision embeddings and the one or more action textual embeddings (304b3).

4. The processor-implemented method (300) as claimed in claim 1, wherein the emotion context of the contextual template plan is generated from the input template image of the multi-modal input using the VLM, by:

passing the input template image of the multi-modal input to a vision encoder of the VLM, to obtain one or more vision embeddings (304c1);

passing a text instruction of an emotion associated with the input template image, to a text encoder of the VLM, to obtain one or more emotion textual embeddings (304c2); and

generating the emotion context of the contextual template plan from a text decoder of the VLM, by conditioning the one or more vision embeddings and the one or more emotional textual embeddings (304c3).

5. The processor-implemented method (300) as claimed in claim 1, wherein retrieving the final meme template for the multi-modal input based on the recontextualized template plan, using the MMR technique, comprises:

retrieving (i) an initial description template based on the recontextualized description present in the recontextualized template plan, (ii) an initial action template based on the recontextualized action present in the recontextualized template plan, and (iii) an initial emotion template based on the recontextualized emotion present in the recontextualized template plan, from a meme template repository, using the MMR search technique (308a); and

choosing the final meme template out of the initial description template, the initial action template and the initial emotion template that best matches the recontextualized template plan, using the MMR search technique (308b).

6. The processor-implemented method (300) as claimed in claim 1, wherein generating the caption text plan based on the multi-modal input and the final meme template retrieved for the multi-modal input, using the LLM, comprises:

deriving a plurality of key phrases from the textual input of the multi-modal input, using the LLM (310a);

contextually combining the plurality of key phrases, using the LLM, to generate the content context (310b);

retrieving a plurality of style specific attributes from the multi-modal input, using the LLM based on the contextual template plan of the final meme template (310c);

contextually combining the plurality of style specific attributes, using the LLM, to generate the style context (310d); and

generating the caption text plan using the content context and the style context (310e).

7. The processor-implemented method (300) as claimed in claim 1, wherein generating the meme caption text for the multi-modal input, using the LLM, based on the caption text plan, the contextual template plan of the final meme template, and the reference caption repository, comprises:

extracting one or more reference captions out of the plurality of reference captions present in the reference caption repository, based on the contextual template plan of the final meme template (312a); and

passing the one or more reference captions, the caption text plan, and the contextual template plan of the final meme template, to the LLM, to generate the meme caption text for the multi-modal input (312b).

8. A system (100), comprising:

a memory (102) storing instructions;

one or more input/output (I/O) interfaces (106);

one or more hardware processors (104) coupled to the memory (102) via the one or more I/O interfaces (106), wherein the one or more hardware processors (104) are configured by the instructions to:

receive a multi-modal input for which a meme is to be generated, from a user, wherein the multi-modal input comprises an input template image and a textual input obtained through multi-modalities;

generate a contextual template plan from the input template image of the multi-modal input using a large language model (LLM) and a vision language model (VLM), wherein the contextual template plan comprises a description context, an action context, and an emotion context;

recontextualize the contextual template plan and the textual input of the multi-modal input, using the LLM, to obtain a recontextualized template plan for the multi-modal input, wherein the recontextualized template plan comprises a recontextualized description, a recontextualized action, and a recontextualized emotion;

retrieve a final meme template for the multi-modal input based on the recontextualized template plan, using a max marginal relevance (MMR) search technique;

generate a caption text plan based on the multi-modal input and the final meme template retrieved for the multi-modal input, using the LLM, wherein the caption text plan comprises a content context and a style context;

generate meme caption text for the multi-modal input, using the LLM, based on the caption text plan, the contextual template plan of the final meme template, and a reference caption repository, wherein the reference caption repository comprises a plurality of reference text captions; and

generate the meme for the multi-modal input, using the final meme template and the meme caption text.

9. The system (100) as claimed in claim 8, wherein the one or more hardware processors (104) are configured to generate the description context of the contextual template plan from the input template image of the multi-modal input using the LLM, by:

obtaining a template metadata of the input template image, from a template metadata repository;

generating a plurality of tags depicting circumstances under which the input template image is relevant, from the template metadata, using the LLM; and

contextually combining the plurality of tags, using the LLM, to generate the description context of the contextual template plan.

10. The system (100) as claimed in claim 8, wherein the one or more hardware processors (104) are configured to generate the action context of the contextual template plan from the input template image of the multi-modal input using the VLM, by:

passing the input template image of the multi-modal input to a vision encoder of the VLM, to obtain one or more vision embeddings;

passing a text instruction of an action associated with the input template image, to a text encoder of the VLM, to obtain one or more action textual embeddings; and

generating the action context of the contextual template plan from a text decoder of the VLM, by conditioning the one or more vision embeddings and the one or more action textual embeddings.

11. The system (100) as claimed in claim 8, wherein the one or more hardware processors (104) are configured to generate the emotion context of the contextual template plan from the input template image of the multi-modal input using the VLM, by:

passing the input template image of the multi-modal input to a vision encoder of the VLM, to obtain one or more vision embeddings;

passing a text instruction of an emotion associated with the input template image, to a text encoder of the VLM, to obtain one or more emotion textual embeddings; and

generating the emotion context of the contextual template plan from a text decoder of the VLM, by conditioning the one or more vision embeddings and the one or more emotional textual embeddings.

12. The system (100) as claimed in claim 8, wherein the one or more hardware processors (104) are configured to retrieve the final meme template for the multi-modal input based on the recontextualized template plan, using the MMR search technique, by:

retrieving (i) an initial description template based on the recontextualized description present in the recontextualized template plan, (ii) an initial action template based on the recontextualized action present in the recontextualized template plan, and (iii) an initial emotion template based on the recontextualized emotion present in the recontextualized template plan, from a meme template repository, using the MMR search technique; and

choosing the final meme template out of the initial description template, the initial action template and the initial emotion template that best matches the recontextualized template plan, using the MMR search technique.

13. The system (100) as claimed in claim 8, wherein the one or more hardware processors (104) are configured to generate the caption text plan based on the multi-modal input and the final meme template retrieved for the multi-modal input, using the LLM, by:

deriving a plurality of key phrases from the textual input of the multi-modal input, using the LLM;

contextually combining the plurality of key phrases, using the LLM, to generate the content context;

retrieving a plurality of style specific attributes from the multi-modal input, using the LLM based on the contextual template plan of the final meme template;

contextually combining the plurality of style specific attributes, using the LLM, to generate the style context; and

generating the caption text plan using the content context and the style context.

**14.** The system (100) as claimed in claim 8, wherein the one or more hardware processors (104) are configured to generate the meme caption text for the multi-modal input, using the LLM, based on the caption text plan, the contextual template plan of the final meme template, and the reference caption repository, by:

extracting one or more reference captions out of the plurality of reference captions present in the reference caption repository, based on the contextual template plan of the final meme template; and

passing the one or more reference captions, the caption text plan, and the contextual template plan of the final meme template, to the LLM, to generate the meme caption text for the multi-modal input.

**15.** One or more non-transitory machine-readable information storage mediums comprising one or more instructions which when executed by one or more hardware processors cause:

receiving a multi-modal input for which a meme is to be generated, from a user, wherein the multi-modal input comprises an input template image and a textual input obtained through multi-modalities;

generating a contextual template plan from the input template image of the multi-modal input using a large language model (LLM) and a vision language model (VLM), wherein the contextual template plan comprises a description context, an action context, and an emotion context;

recontextualizing the contextual template plan and the textual input of the multi-modal input, using the LLM, to obtain a recontextualized template plan for the multi-modal input, wherein the recontextualized template plan comprises a recontextualized description, a recontextualized action, and a recontextualized emotion;

retrieving a final meme template for the multi-modal input based on the recontextualized template plan, using a max marginal relevance (MMR) search technique;

generating a caption text plan based on the multi-modal input and the final meme template retrieved for the multi-modal input, using the LLM, wherein the caption text plan comprises a content context and a style context;

generating a meme caption text for the multi-modal input, using the LLM, based on the caption text plan, the contextual template plan of the final meme template, and a reference caption repository, wherein the reference caption repository comprises a plurality of reference text captions; and

generating the meme for the multi-modal input, using the final meme template and the meme caption text.

System **100**

**108**

Memory **102**

Modules **102a**

Repository **102b**

I/O interface(s) **106**

Hardware
processor(s) **104**

FIG. 1

```
                  ┌──────────────┐      ┌──────────────┐   Retrieved
                  │     202      │      │     204      │   template
              ┌──▶│ Meme template│──────▶│ Meme template│──────────┐
              │   │   planner    │      │   retriever  │          │
              │   └──────────────┘      └──────┬───────┘          ▼
 Multi-       │                    ┌───────────┘          ┌──────────────┐   Meme
 model  ──────┤                    │                      │     210      │──────▶
 input        │                    ▼                      │Meme generator│
              │   ┌──────────────┐      ┌──────────────┐  └──────────────┘
              │   │     206      │      │     208      │          ▲
              └──▶│ Meme caption │──────▶│ Meme caption │──────────┘
                  │   planner    │      │   generator  │   Generated
                  └──────────────┘      └──────────────┘   caption
```

FIG. 2

300

Receive a multi-modal input for which a meme is to be generated, from a user, wherein the multi-modal input comprises an input template image and a textual input obtained through multi-modalities — 302

Generate a contextual template plan from the input template image of the multi-modal input using a large language model (LLM) and a vision language model (VLM), wherein the contextual template plan comprises a description context, an action context, and an emotion context — 304

Recontextualize the contextual template plan and the textual input of the multi-modal input, using the LLM, to obtain a recontextualized template plan for the multi-modal input, wherein the recontextualized template plan comprises a recontextualized description, a recontextualized action, and a recontextualized emotion — 306

Retrieve a final meme template for the multi-modal input based on the recontextualized template plan, using a max marginal relevance (MMR) search technique — 308

A

FIG. 3A

Ⓐ

Generate a caption text plan based on the multi-modal input and the final meme template retrieved for the multi-modal input, using the LLM, wherein the caption text plan comprises a content context and a style context — 310

Generate meme caption text for the multi-modal input, using the LLM, based on the caption text plan, the contextual template plan of the final meme template, and a reference caption repository, wherein the reference caption repository comprises a plurality of reference text captions — 312

Generate the meme for the multi-modal input, using the final meme template and the meme caption text — 314

FIG. 3B

Obtaining a template metadata of the input template image, from a template metadata repository — 304a1

Generating a plurlaity of tags depicting circumstances under which the input template image is relevant, from the template metadata, using the LLM — 304a2

Contextually combining the plurality of tags, using the LLM, to generate the description context of the contextual template plan — 304a3

FIG. 4

Template Name: Running Away Balloon

About: Running Away Balloon is a two-panel exploitable webcomic featuring a grey character attempting to reach a yellow balloon [...]

Origin: In 2008, a webcomic artist ABC shared the original comic. [...]

Spread: In 2008, a variation was posted and labeled the yellow balloon "beautiful girls" and the pink character labeled "my face my luck my empty pockets...[...]

Tags: big yellow ball and pink guy, me vs my hopes and dreams, [...]

Example Captions: WEEKEND; ME; WEEKEND; 13 MISSING AS-SIGNMENTS 12 ESSAYS DUE IN 2 HOURS AND THE CHAPTEROF YOUR BOOK YOU WERE SUPPOSED TO READ; ME. [...]

FIG. 5

Passing the input template image of the multi-modal input to a vision encoder of the VLM, to obtain one or more vision embeddings — 304b1

Passing a text instruction of an action associated with the input template image, to a text encoder of the VLM, to obtain one or more action textual embeddings — 304b2

Generating the action context of the contextual template plan from a text decoder of the VLM, by conditioning the one or more vision embeddings and the one or more action textual embeddings — 304b3

FIG. 6

Passing the input template image of the multi-modal input to a vision encoder of the VLM, to obtain one or more vision embeddings — 304c1

Passing a text instruction of an emotion associated with the input template image, to a text encoder of the VLM, to obtain one or more emotion textual embeddings — 304c2

Generating the emotion context of the contextual template plan from a text decoder of the VLM, by conditioning the one or more vision embeddings and the one or more emotional textual embeddings — 304c3

FIG. 7

Retrieving (i) an initial description template based on the recontextualized description present in the recontextualized template plan, (ii) an initial action template based on the recontextualized action present in the recontextualized template plan, and (iii) an initial emotion template based on the recontextualized emotion present in the recontextualized template plan, from a meme template repository, using the max marginal relevance (MMR) search technique ⟋ 308a

Choosing the final meme template out of the initial description template, the initial action template and the initial emotion template that best matches the recontextualized template plan, using the max marginal relevance (MMR) search technique ⟋ 308b

FIG. 8

Deriving a plurality of key phrases from the textual input of the multi-modal input, using the LLM ⟋ 310a

Contextually combining the plurality of key phrases, using the LLM, to generate the content context ⟋ 310b

Retrieving a plurality of style specific attributes from the multi-modal input, using the LLM based on the contextual template plan of the final meme template ⟋ 310c

Contextually combining the plurality of style specific attributes, using the LLM, to generate the style context ⟋ 310d

Generating the caption text plan using the content context and the style context ⟋ 310e

FIG. 9

Extracting one or more reference captions out of the plurality of reference captions present in the reference caption repository, based on the contextual template plan of the final meme template

312a

Passing the one or more reference captions, the caption text plan, and the contextual template plan of the final meme template, to the LLM, to generate the meme caption text for the multi-modal input

312b

FIG. 10

Multi-modal
user input

Recontextualized template plan

My Phd defense
is getting delayed.

**202**
Meme template
planner

Description: Long wait times,
PhD defense delay, Frustration,
Boredom,
Action: Sitting patiently,
waiting for the defense to end,
Emotion: Frustrated and bored.

Retrieved meme
template

C' man
Do something...

**204**
Meme template
retriever

FIG. 11

Multi-modal
user input

Retrieved meme
template

My Phd defense
is getting delayed.

+

C' man
Do something...

**206**
Meme caption
planner

Caption text plan

Content: My Phd defense is getting delayed,
Long wait times, Frustration and boredom.

Style: Concise and sarcastic with a hint of
desperation.

**208**
Meme caption
generator

My Phd defense is getting delayed... again.

FIG. 12

Europäisches
Patentamt
European
Patent Office
Office européen
des brevets

## EUROPEAN SEARCH REPORT

**Application Number**

EP 25 18 4549

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/289360 A1 (CHEPKWONY ISAAC [US]) 29 August 2024 (2024-08-29) * paragraphs [0025] - [0027], [0045], [0055], [0058]; figure 3B * ----- | 1-15 | INV. G06F16/40 G06F16/9032 |
| | | | TECHNICAL FIELDS SEARCHED (IPC) |
| | | | G06F |

The present search report has been drawn up for all claims

| Place of search | Date of completion of the search | Examiner |
|---|---|---|
| The Hague | 24 October 2025 | Hackelbusch, Richard |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...............................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 18 4549

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2025

| Patent document cited in search report | Publication date | Patent family member(s) | Publication date |
|---|---|---|---|
| US 2024289360 A1 | 29-08-2024 | NONE | |

For more details about this annex : see Official Journal of the European Patent Office, No. 12/82

**EP 4 703 909 A1**

**REFERENCES CITED IN THE DESCRIPTION**

**Patent documents cited in the description**

- IN 202421065910